# EUROPÄISCHE PATENTSCHRIFT

(11) **EP 1 398 905 B1**
(45) Veröffentlichungstag und Bekanntmachung des Hinweises auf die Patenterteilung: **15.06.2005**
(21) Anmeldenummer: 02020646.2
(22) Anmeldetag: 13.09.2002
(51) Int. Cl.: H04L 12/24

(54) **Kommunikationsnetzplanungssystem, Verfahren zur Erzeugung von Kommunikationsnetzplänen und Steuerungsprogramm für ein Kommunikationsnetzplanungssystem**
Communications network planning system, method of generation of communications network plans and control program for a communications network planning system
Système de planification de réseau de communication, procédé pour la génération de plans de réseau de communication et programme de commande pour un système de planification de réseau de communication

(43) Veröffentlichungstag der Anmeldung: 17.03.2004
(73) Patentinhaber: SIEMENS AKTIENGESELLSCHAFT, 80333 München (DE)
(72) Erfinder: Kuechler, Rudolf, Dr., 82065 Baierbrunn (DE); Gierschik, Thomas, 82515 Wolfratshausen (DE)

(56) Entgegenhaltungen:
- EP-A- 0 457 445
- GB-A- 2 370 720
- US-A- 5 958 012
- DUPUY A: "NETMATE: A NETWORK MANAGEMENT ENVIRONMENT" , IEEE NETWORK, IEEE INC. NEW YORK, US, VOL. 5, NR. 2, PAGE(S) 35-40,43 XP000207780 ISSN: 0890-8044 Abschnitt "User Interface" auf * Seite 36, rechte Spalte - Seite 37, linke Spalte *
- HIROKO FUJI ET AL: "DUALQUEST: REAL-TIME BIFOCAL NETWORK VISUALIZATION SYSTEM" , IEICE TRANSACTIONS ON COMMUNICATIONS, INSTITUTE OF ELECTRONICS INFORMATION AND COMM. ENG. TOKYO, JP, VOL. E78-B, NR. 1, PAGE(S) 68-73 XP000495106 ISSN: 0916-8516 Seite 68, Zusammenfassung * Seite 69, rechte Spalte, Zeile 12 - Seite 70, linke Spalte, Zeile 13 *

## Beschreibung

In EP 1 098 474 A1 ist ein Kommunikationsnetz-Modellierungssystem beschrieben, das ein Netzinformationsmodell umfaßt und eine Funktionen- sowie eine Geräte-Datenbasis sowohl erzeugt als auch verwaltet. Die Funktionen- und die Geräte-Datenbasis sind miteinander verknüpft und dienen zur Erzeugung eines Wege und Verbindungen umfassenden Netzmodells. Eine Steuerungseinrichtung steht in Wechselwirkung mit einem oder mehreren Systemmodulen, die das Netzinformationsmodell für spezielle Funktionen nutzen, beispielsweise Netzplanung.

Das Dokument Dupuy A, "Netmate: A Network Management Environment", IEEE Network, Seite 35-40, offenbart ein Netzmanagementsystem mit einer graphischen Benutzerschnittstelle, die die gleichzeitige Darstellung von Teilnetzen, deren zugehörigen Knoten und entsprechenden Verbindungen, ermöglicht. Durch die Anwahl eines Teilnetzes durch den Benutzer wird dieses am Bildschirm in einem eigenen Fenster dargestellt.

Aus EP 0 460 843 A2 ist eine rechnergestützte Netzplanungseinrichtung bekannt, das eine zur Darstellung eines Kommunikationsnetzes mit einer Vielzahl von Knoten vorgesehene Anzeigeeinrichtung aufweist. Jedem der Knoten ist eine Vielzahl von untergeordneten Knoten zugeordnet, wobei die untergeordneten Knoten eine vorbestimmte Verkehrsbeziehung zu dem zugeordneten Knoten und zu zumindest einem weiteren Knoten aufweisen. Auf eine Benutzereingabe werden einem ausgewählten Knoten zugeordnete untergeordnete Knoten ermittelt. Außerdem wird ermittelt, welche der untergeordneten Knoten eine intensivere Verkehrsbeziehung zu dem zumindest einen weiteren Knoten als zu dem ausgewählten Knoten aufweisen, um gegebenenfalls eine Zuordnungsänderung vorzunehmen.

Bei bisherigen Netzplanungs- oder Netzdokumentationseinrichtungen erfolgt eine Gliederung einer Netzdarstellung in Übersichtsplan, Schemaplan und Bestandsplan des Gesamtnetzes bzw. ausgewählter Teilnetze. Üblicherweise werden verschiedene Teilnetze nicht in einer einheitlichen systematischen Art und Weise dargestellt. Dies führt bei einem Vergleich bzw. einer Bewertung unterschiedlicher Darstellungen oft zu Fehlinter-pretationen, wenn ähnlich wirkende Darstellung tatsächlich doch unterschiedlich zu interpretieren sind.

Der vorliegenden Erfindung liegt daher die Aufgabe zugrunde, ein Kommunikationsnetzplanungssystem zur übersichtlichen, kompakten Darstellung von für eine effektive Netzplanung aussagekräftigen Informationen, ein Verfahren zur Erzeugung von entsprechenden Kommunikationsnetzplänen und ein für das Kommunikationsnetzplanungssystem geeignetes Steuerungsprogramm zu schaffen.

Erfindungsgemäß wird diese Aufgabe durch ein Kommunikationsnetzplanungssystems mit den in Anspruch 1 angegebenen Merkmalen, ein Verfahren mit den in Anspruch 6 angegebenen Merkmalen und ein Steuerungsprogramm mit den in Anspruch 7 angegebenen Merkmalen gelöst. Vorteilhafte Weiterbildungen der vorliegenden Erfindung sind in den abhängigen Ansprüchen angegeben.

Ein wesentlicher Aspekt der vorliegenden Erfindung besteht in einer einheitlichen Darstellung von Teilnetzen mit einer hierarchisch gegliederten Wiedergabe von im jeweiligen Teilnetz vorhandenen Knotenarten und von zwischen den Knotenarten bestehenden Verknüpfungen. Dies ermöglicht eine zuverlässige und rasche Bewertungen von Darstellungen unterschiedlicher Teilnetze. Des weiteren können Topologien von Teilnetzen durch eine kombinierte graphische Darstellung jeweils eines Ausschnittes von miteinander verbundenen Teilnetzen im Bereich eines Teilnetzübergangs in Bezug zueinander verglichen werden. Dies unterstützt eine Vermeidung einer Verknüpfung von Funktionen aus verschiedenen Teilnetzen, die topologisch keine direkte Verbindung aufweisen.

Die vorliegende Erfindung wird nachfolgend an einem Ausführungsbeispiel anhand der Zeichnung näher erläutert. Es zeigt
- Figur 1: eine an einer graphischen Benutzerschnittstelle eines Kommunikationsnetzplanungssystems dargestellte Übersicht über Teilnetze innerhalb eines Kommunikationsnetzes,
- Figur 2: eine Darstellung eines Teilnetzes an der graphischen Benutzerschnittstelle mit Angaben zur Funktionalität von im Teilnetz vorhandenen Knotenarten,
- Figur 3: eine Darstellung eines Teilnetzes an der graphischen Benutzerschnittstelle mit Angaben zu Knotenzahlen und Knotenstandorten,
- Figur 4: eine Darstellung eines Teilnetzes an der graphischen Benutzerschnittstelle mit Angaben zu Infrastruktureinrichtungsprodukten und deren Herstellern,
- Figur 5: eine kombinierte Darstellung an der graphischen Benutzerschnittstelle von jeweils einem Ausschnitt von zwei miteinander verbundenen Teilnetzen im Bereich eines Teilnetzübergangs.

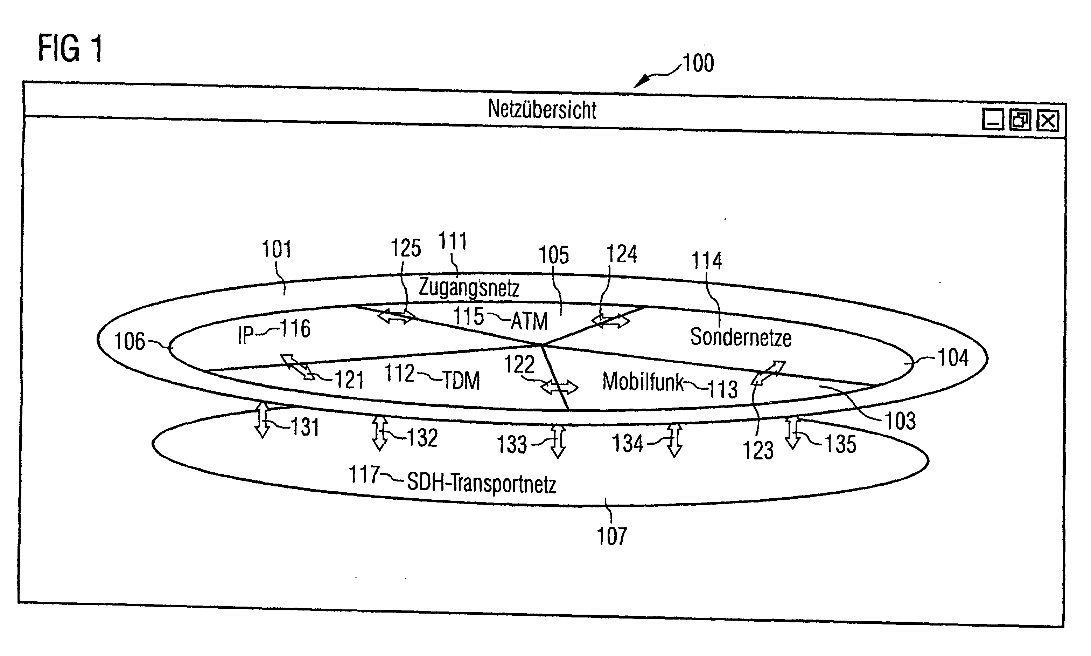

Figur 1 zeigt eine an einer graphischen Benutzerschnittstelle eines Kommunikationsnetzplanungssystems dargestellte Übersicht 100 über Teilnetze 101-107 innerhalb eines Kommunikationsnetzes. Das Kommunikationsnetzplanungssystem ist beispielsweise durch eine übliche, nicht näher dargestellte Datenverarbeitungsanlage realisiert, auf der ein Betriebssystem mit graphischer Benutzeroberfläche installiert ist. Die Übersicht 100 über die Teilnetze 101-107 wird beispielsweise in einem speziellen Darstellungsbereich einer der Datenverarbeitungsanlage zugeordneten Anzeigeeinrichtung dargestellt. Ein solcher Darstellungsbereich wird im Kontext von Rechnerbetriebssystemen mit graphischen Benutzeroberflächen auch als Fenster bezeichnet. Beim vorliegenden Ausführungsbeispiel umfaßt das Kommunikationsnetz ein teilnehmerseitiges Zugangsnetz 101, ein digitales Fernwählnetz 102 in Zeitmultiplextechnik (TDM - time division multiplex), ein Mobilfunknetz 103, Sondernetze 104, ein ATM-Netz (ATM - asynchronous transfer mode), ein Paketdatennetz 106 in IP-Technik (IP - internet protocol) und ein SDH-Transportnetz 107 (SDH - synchrone digitale Hierarchie).

Des weiteren umfaßt die Übersicht 100 über die Teilnetze 101-107 Selektoren 111-117 zur Auswahl einer graphischen Darstellung des jeweiligen Teilnetzes 101-107. Die Selektoren 111-117 sind beispielsweise in Hyperlink-Technik implementiert, so daß sich die graphische Darstellung des jeweiligen Teilnetzes 101-107 durch Anwahl eines dem Hyperlink zugeordneten Text- bzw. Graphikelements aufrufen läßt.

Darüber hinaus umfaßt die Übersicht 100 über die Teilnetze 101-107 Selektoren 121-125, 131-135 zur Auswahl einer kombinierten graphischen Darstellung jeweils eines Ausschnittes von miteinander verbundenen Teilnetzen im Bereich eines Teilnetzübergangs. Durch Anwahl eines dem jeweiligen Selektor 121-125, 131-135 zugeordneten Graphikelements läßt sich eine gewünschte kombinierte graphische Darstellung eines Teilnetzübergangs aufrufen.

Die Selektoren 111-117, 121-125, 131-135 lassen sich mittels einer nicht näher dargestellten Eingabeeinheit ansteuern, die der das Kommunikationsnetzplanungssystem realisierenden Datenverarbeitungsanlage zugeordnet ist. Die Datenverarbeitungsanlage weist darüber hinaus eine Steuerungseinheit zur Ansteuerung der graphischen Benutzerschnittstelle entsprechend Selektionseingaben auf, die von der Eingabeeinheit empfangen wurden. Zur Steuerung des Kommunikationsnetzplanungssystems ist ein Steuerungsprogramm vorgesehen, das in einen Arbeitsspeicher der Datenverarbeitungsanlage ladbar ist und zumindest einen Codeabschnitt aufweist, bei dessen Ausführung - also bei Ablauf des Steuerungsprogramms - die im Rahmen der Beschreibung des vorliegenden Ausführungsbeispiels dargelegten Schritte abgearbeitet werden.

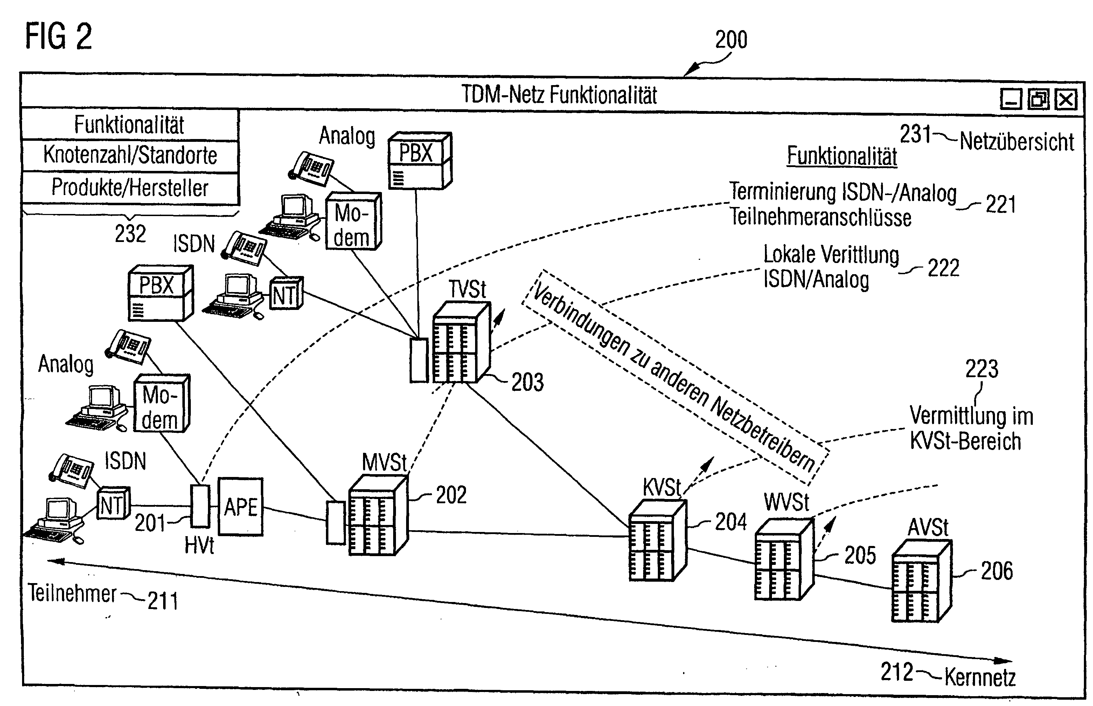

Nach Aktivierung eines Selektors 111-117 zur Auswahl einer graphischen Auswahl eines Teilnetzes 101-107 wird die graphische Darstellung des ausgewählten Teilnetzes an der graphischen Benutzerschnittstelle des Kommunikationsnetzplanungssystems wiedergegeben. Für die nachfolgenden Betrachtungen wird angenommen, daß der Selektor 112 für das digitale Fernwählnetz 102 aktiviert wird. An der graphischen Benutzerschnittstelle wird dann eine Darstellung 200 des digitalen Fernwählnetzes 102 mit Angaben zur Funktionalität von im digitalen Fernwählnetz 102 vorhandenen Knotenarten entsprechend Figur 2 wiedergegeben.

Die Darstellung 200 des digitalen Fernwählnetzes 102 umfaßt eine hierarchisch gegliederte Wiedergabe von im digitalen Fernwählnetz 102 vorhandenen Knotenarten 201-206 und eine Wiedergabe von zwischen diesen Knotenarten 201-206 bestehenden Verknüpfungen. Die Verknüpfungen spiegeln dabei Verbindungen oder Wege wieder. Zu dem im digitalen Fernwählnetz 102 vorhandenen Knotenarten zählen Hauptverteiler 201, Muttervermittlungsstellen 202, Teilnehmervermittlungsstellen 203, Knotenvermittlungsstellen 204, Weitverkehrsvermittlungsstellen 205 und Auslandsvermittlungsstellen 206. Die hierarchisch gegliederte Wiedergabe von im digitalen Fernwählnetz 102 vorhandenen Knotenarten 201-206 erfolgt dabei entsprechend einer Zuordenbarkeit der jeweiligen Knotenart 201-206 zu einer Netzhierarchieebene zwischen Teilnehmer 211 und Kernnetz 212. Demzufolge sind die im digitalen Fernwählnetz 102 vorhandenen Knotenarten 201-206 in hierarchisch absteigender Reihenfolge zunächst nach Auslandsvermittlungsstellen 206, danach nach Weitverkehrsvermittlungsstellen 205, Knotenvermittlungsstellen 204, Teilnehmervermittlungsstellen 203 und Muttervermittlungsstellen 202 sowie abschließend nach Hauptverteilern 201 gegliedert. Den im digitalen Fernwählnetz 102 vorhandenen Knotenarten 201-206 sind Angaben 221-223 zu ihrer jeweiligen Funktionalität zugeordnet, die von der Darstellung 200 des digitalen Fernwählnetzes 102 gemäß Figur 2 umfaßt sind. Beispielsweise ist den Hauptverteilern 201 die Angabe 221 "Terminierung ISDN-/Analog-Teilnehmeranschlüsse" zugeordnet. In entsprechender Weise ist den Muttervermittlungsstellen 202 und den Teilnehmervermittlungsstellen 203 die Angabe 222 "Lokale Vermittlung ISDN/Analog" zugeordnet. Den Knotenvermittlungsstellen 204 ist ferner die Angabe 223 "Vermittlung im KVSt-Bereich" zugeordnet.

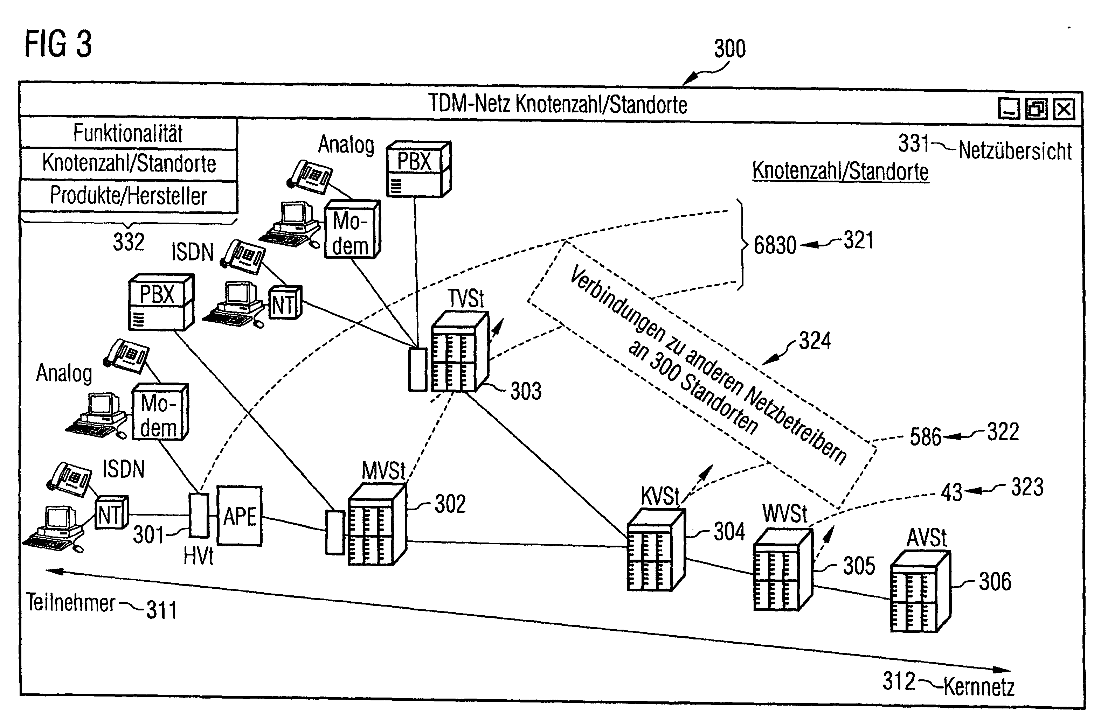

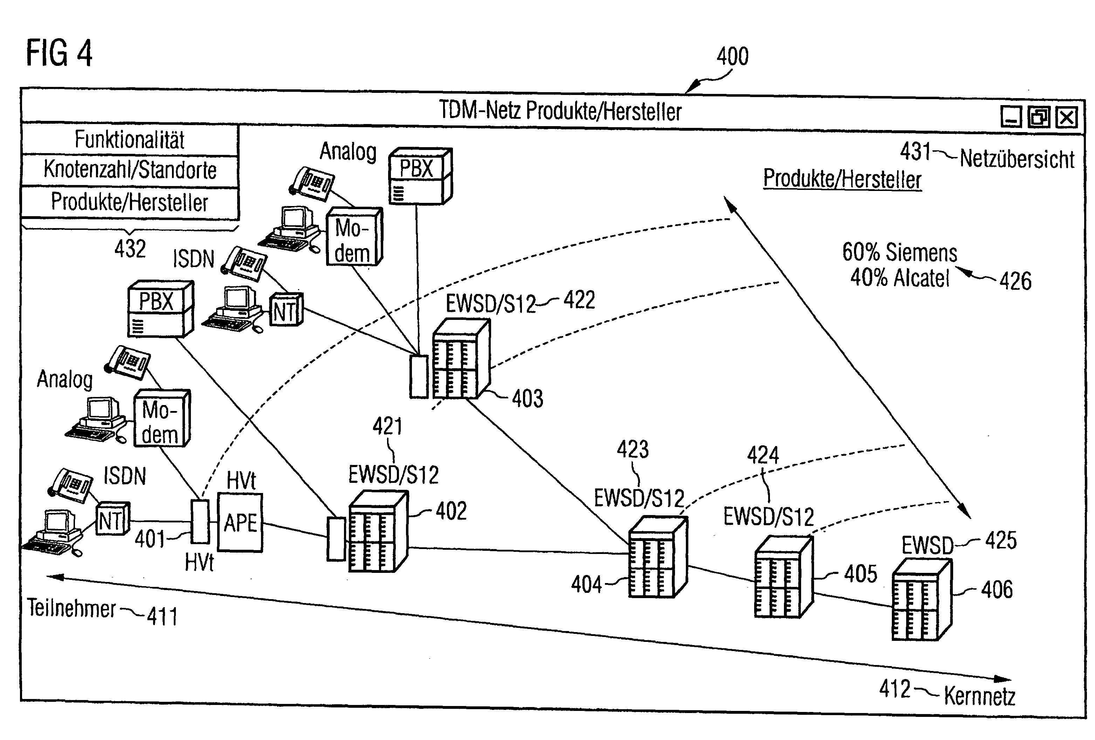

Die in Figur 2 gezeigte Darstellung 200 des digitalen Fernwählnetzes 102 an der graphischen Benutzerschnittstelle des Kommunikationsnetzplanungssystems umfaßt außerdem einen Selektor 231 zur Anwahl einer Netzübersicht entsprechend Figur 1 und Selektoren 232 zur Anwahl von Darstellungen 300, 400 des digitalen Fernwählnetzes 102 mit Angaben zu Knotenzahlen und Knotenstandorten gemäß Figur 3 bzw. mit Angaben zu Infrastruktureinrichtungsprodukten und deren Herstellern gemäß Figur 4.

Die Darstellung 300 des digitalen Fernwählnetzes 102 Figur 3 umfaßt eine hierarchisch gegliederte Wiedergabe von im digitalen Fernwählnetz 102 vorhandenen Knotenarten 301-306 und eine Wiedergabe von zwischen diesen Knotenarten 301-306 bestehenden Verknüpfungen und entspricht in dieser Hinsicht der Darstellung 200 des digitalen Fernwählnetzes 102 gemäß Figur 2. Ebenso sind die Knotenarten 301-306 gemäß Figur 3 entsprechend einer Zuordenbarkeit der jeweiligen Knotenarten 301-306 zu einer Netzhierarchieebene zwischen Teilnehmer 311 und Kernnetz 312 angeordnet. Im Vergleich zu der Darstellung 200 des digitalen Fernwählnetzes 102 gemäß Figur 2 umfast die Darstellung 300 des digitalen Fernwählnetzes 102 gemäß Figur 3 anstelle der Angaben 221-223 zur Funktionalität der jeweiligen Knotenarten 201-206 Angaben 321-324 zu Anzahlen von Knoten je Knotenart und zu Anzahlen von Standorten je Knotenart. Dabei können auch Anzahlen von Standorten für mehrere Knotenarten zusammengefaßt werden. Wie die Darstellung 200 des digitalen Fernwählnetzes 102 gemäß Figur 2 weist die Darstellung 300 des digitalen Fernwählnetzes 102 gemäß Figur 3 einen Selektor 331 zur Anwahl einer Netzübersicht gemäß Figur 1 und Selektoren 332 zur Anwahl einer Darstellung des digitalen Fernwählnetzes 102 mit alternativen Detailangaben auf.

Die Darstellung 400 des digitalen Fernwählnetzes 102 gemäß Figur 4 ist in der gleichen Weise wie die Darstellungen 200, 300 gemäß Figur 2 und 3 hierarchisch gegliedert. So sind im digitalen Fernwählnetz 102 vorhandene Knotenarten 401-406 entsprechend ihrer Zuordenbarkeit zu einer Netzhierarchieebene zwischen Teilnehmer 411 und Kernnetz 412 wiedergegeben. Anstelle der Angaben 221-223 zur Funktionalität der Knotenarten 201-206 umfaßt die Darstellung 400 des digitalen Fernwählnetzes 201 gemäß Figur 4 Angaben 421-425 zu Infrastruktureinrichtungsprodukten und Angaben 426 zu den Herstellern dieser Infrastruktureinrichtungsprodukte. Der Detaillierungsgrad der Herstellerangaben kann dabei so beschaffen sein, daß er über alle betrachteten Knotenarten 401-406 hinweg eine prozentuale Aussage über die Hersteller umfaßt. Auch die Darstellung 400 des digitalen Fernwählnetzes 102 gemäß Figur 4 umfaßt einen Selektor 431 zur Anwahl einer Netzübersicht gemäß Figur 1 und Selektoren 432 zur Anwahl alternativer Darstellungsarten des digitalen Fernwählnetzes 102.

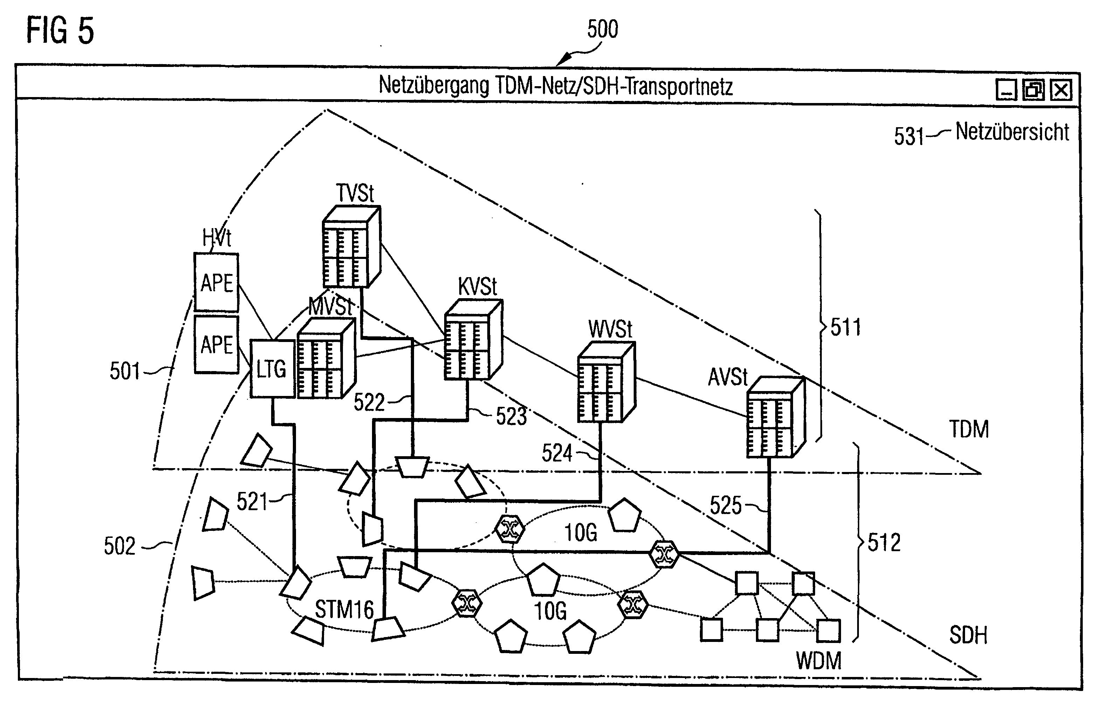

In Figur 5 ist eine kombinierte Darstellung 500 an der graphischen Benutzerschnittstelle des Kommunikationsnetzplanungssystems wiedergegeben, die jeweils einen Ausschnitt von zwei miteinander verbundenen Teilnetzen im Bereich eines Teilnetzübergangs umfaßt. Eine derartige Darstellung 500 kann durch Aktivieren eines der in Figur 1 dargestellten Selektoren 131-135 zur Auswahl einer Darstellung eines Teilnetzübergangs angewählt werden. Nachfolgend wird der Fall betrachtet, daß eine Darstellung des Teilnetzübergangs zwischen dem digitalen Fernwählnetz 102 und dem SDH-Transportnetz 107 angewählt wird. Die Darstellung 500 des Teilnetzübergangs zwischen dem digitalen Fernwählnetz 102 und dem SDH-Transportnetz 107 umfaßt eine hierarchisch gegliederte Wiedergabe von im jeweiligen Teilnetzübergangsbereich 501, 502 vorhandenen Knotenarten 511, 512 und eine Wiedergabe von zwischen diesen Knotenarten 511, 512 bestehenden Teilnetzquerverbindungen 521-525. Analog zu der hierarchisch gegliederten Darstellung 200, 300, 400 des digitalen Fernwählnetzes 102 gemäß einer der Figuren 2 bis 4 sind die im jeweiligen Teilnetzübergangsbereich vorhandenen Knotenarten 511, 512 entsprechend ihrer Zuordenbarkeit zu einer Netzhierarchieebene zwischen Teilnehmerzugangs- und Transportnetz gegliedert. Des weiteren weist die Darstellung 500 des Teilnetzübergangs zwischen dem digitalen Fernwählnetz 102 und dem SDH-Transportnetz 107 gemäß Figur 5 einen Selektor 531 zur Anwahl einer Netzübersicht gemäß Figur 1 auf.

Zusätzlich zu den Selektoren 231-232, 331-332, 431-432, 531 gemäß einer der Figuren 2 bis 5 können die Darstellungen 200, 300, 400, 500 einen Selektor zum Ausdruck einer graphischen Darstellung des jeweiligen Teilnetzes bzw. einen Selektor zum Ausdruck einer kombinierten graphischen Darstellung jeweils eines Ausschnittes von miteinander verbundenen Teilnetzen im Bereich eines Teilnetzübergangs aufweisen. Entsprechend an der dem Kommunikationsnetzplanungssystem zugeordneten Eingabeeinheit empfangenen Selektionsangaben kann ein mit dem Kommunikationsnetzplanungssystem direkt oder über ein Netz verbundener Drucker zum Ausdrucken von Kommunikationsnetzplänen angesteuert werden. Auf diese Weise lassen sich Kommunikationsnetzpläne erzeugen, die im wesentlichen den in den Figuren 2 bis 5 wiedergegebenen Darstellungen 200,300, 400, 500 eines Teilnetzes bzw. eines Teilnetzübergangs entsprechen.

Die Anwendung der vorliegenden Erfindung ist nicht auf das hier beschriebene Ausführungsbeispiel beschränkt.

## Patentansprüche

1. Kommunikationsnetzplanungssystem mit
- einer graphischen Benutzerschnittstelle, an der eine Steuerungseinheit zur Ansteuerung der graphischen Benutzerschnittstelle entsprechend von einer Eingabeeinheit empfangenen Selektionseingaben bereitgestellt ist,
- eine Übersicht (100) über Teilnetze (101-107) innerhalb eines Kommunikationsnetzes bereitgestellt ist,
- ein Selektor (111-117) zur Auswahl einer graphischen Darstellung eines Teilnetzes (101-107) bereitgestellt ist, die eine hierarchisch gegliederte Wiedergabe von im jeweiligen Teilnetz vorhandenen Knotenarten (301-306) und eine Wiedergabe von zwischen diesen Knotenarten bestehenden Verknüpfungen umfaßt, **dadurch gekennzeichnet, daß**
- ein Selektor (121-125,131-135) zür Auswahl einer kombinierten graphischen Darstellung jeweils eines Ausschnittes von miteinander verbundenen Teilnetzen im Bereich eines Teilnetzübergangs bereitgestellt ist, die eine hierarchisch gegliederte Wiedergabe von im jeweiligen Teilnetzübergangsbereich vorhandenen Knotenarten (511,512) und eine Wiedergabe von zwischen diesen Knotenarten bestehenden Verbindungen umfaßt.

2. System nach Anspruch 1,
bei dem die hierarchisch gegliederte Wiedergabe von im jeweiligen Teilnetz und/oder Teilnetzübergangsbereich vorhandenen Knotenarten entsprechend einer Zuordenbarkeit der jeweiligen Knotenart zu einer Netzhierarchieebene zwischen Teilnehmerzugangs- und Transportnetz erfolgt.

3. System nach einem der Ansprüche 1 oder 2,
bei dem die graphische Darstellung eines Teilnetzes Angaben zur Funktionalität der jeweiligen Knotenarten umfaßt.

4. System nach einem der Ansprüche 1 bis 3,
bei dem die graphische Darstellung eines Teilnetzes Angaben zu Anzahlen von Knoten je Knotenart und/oder zu Anzahlen von Standorten je Knotenart umfaßt.

5. System nach einem der Ansprüche 1 bis 4,
bei dem die graphische Darstellung eines Teilnetzes Angaben zu den jeweiligen Knotenarten zugeordneten Infrastruktureinrichtungsprodukten und/oder deren Hersteller umfaßt.

6. Verfahren zur Erzeugung von Kommunikationsnetzplänen, bei dem
- eine dem Kommunikationsnetzplanungssystem zugeordnete Druckereinrichtung entsprechend von einer Eingabeeinheit empfangenen Selektionseingaben zum Ausdrucken von Kommunikationsnetzplänen angesteuert wird,
- an einer graphischen Benutzerschnittstelle eines Kommunikationsnetzplanungssystems
- ein Selektor (111-117) zum Ausdruck einer graphischen Darstellung eines Teilnetzes (101-107) bereitgestellt wird, die eine hierarchisch gegliederte Wiedergabe von im jeweiligen Teilnetz vorhandenen Knotenarten (301-306) und eine Wiedergabe von zwischen diesen Knotenarten bestehenden Verknüpfungen umfaßt, **dadurch gekennzeichnet, daß**
- ein Selektor (121-125, 131-135) zum Ausdruck einer kombinierten graphischen Darstellung jeweils eines Ausschnittes von miteinander verbundenen Teilnetzen im Bereich eines Teilnetzübergangs bereitgestellt wird, die eine hierarchisch gegliederte Wiedergabe von im jeweiligen Teilnetzübergangsbereich vorhandenen Knotenarten (511,512) und eine Wiedergabe von zwischen diesen Knotenarten bestehenden Verbindungen umfaßt.

7. Steuerungsprogramm für ein Kommunikationsnetzplanungssystem, das in einen Arbeitsspeicher einer Programmsteuerungseinrichtung ladbar ist und zumindest einen Codeabschnitt aufweist, bei desssen Ausführung
- an einer graphischen Benutzerschnittstelle des Kommunikationsnetzplanungssystems
- die graphische Benutzerschnittstelle entsprechend von einer Eingabeeinheit empfangenen Selektionseingaben zur Darstellung eines ausgewählten Teilnetzes und/oder Teilnetzübergangs angesteuert wird,
- eine Übersicht (100) über Teilnetze (101-107) innerhalb eines Kommunikationsnetzes bereitgestellt wird,
- ein Selektor (111-117) zur Auswahl einer graphischen Darstellung eines Teilnetzes (101-107) bereitgestellt wird, die eine hierarchisch gegliederte Wiedergabe von im jeweiligen Teilnetz vorhandenen Knotenarten (301-306) und eine Wiedergabe von zwischen diesen Knotenarten bestehenden Verknüpfungen umfaßt, **dadurch gekennzeichnet, daß**
- ein Selektor (121-115,131-135) zur Auswahl einer kombinierten graphischen Darstellung jeweils eines Ausschnittes von miteinander verbundenen Teilnetzen im Bereich eines Teilnetzübergangs bereitgestellt wird, die eine hierarchisch gegliederte Wiedergabe von im jeweiligen Teilnetzübergangsbereich vorhandenen Knotenarten (511,512) und eine Wiedergabe von zwischen diesen Knotenarten bestehenden Verbindungen umfaßt,
wenn das Steuerungsprogramm in der Programmsteuerungseinrichtung abläuft.

## Claims

1. Communication network planning system having a graphical user interface on which
- a control unit for actuating the graphical user interface on the basis of selection inputs received by an input unit is provided,
- an overview (100) of subnetworks (101-107) within a communication network is provided,
- a selector (111-117) for selecting a graphical representation of a subnetwork (101-107) is provided, said graphical representation comprising a hierarchically structured reproduction of node types (301-306) existing in the respective subnetwork and a reproduction of links existing between these node types, **characterized in that**
- a selector (121-125, 131-135) for selecting a combined graphical representation of a respective segment of interconnected subnetworks in the region of a subnetwork gateway is provided, said graphical representation comprising a hierarchically structured reproduction of node types (511, 512) existing in the respective subnetwork gateway region and a reproduction of connections existing between these node types.

2. System according to Claim 1,
in which the hierarchically structured reproduction of node types existing in the respective subnetwork and/or subnetwork gateway region is produced on the basis of an assignability for the respective node type to a network hierarchy level between subscriber access network and transport network.

3. System according to either of Claims 1 or 2,
in which the graphical representation of a subnetwork comprises statements relating to the functionality of the respective node type.

4. System according to one of Claims 1 to 3,
in which the graphical representation of a subnetwork comprises statements relating to numbers of nodes per node type and/or to numbers of locations per node type.

5. System according to one of Claims 1 to 4,
in which the graphical representation of a subnetwork comprises statements relating to infrastructure set-up products associated with the respective node types and/or to the manufacturers of said products.

6. Method for producing communication network plans, in which
- a printer device associated with the communication network planning system is actuated on the basis of selection inputs received by an input unit for the purpose of printing communication network plans,
- on a graphical user interface in a communication network planning system
- a selector (111-117) for printing a graphical representation of a subnetwork (101-107) is provided, said graphical representation comprising a hierarchically structured reproduction of node types (301-306) existing in the respective subnetwork and a reproduction of links existing between these node types, **characterized in that**
- a selector (121-125, 131-135) for printing a combined graphical representation of a respective segment of interconnected subnetworks in the region of a subnetwork gateway is provided, said graphical representation comprising a hierarchically structured reproduction of node types (511, 512) existing in the respective subnetwork gateway region and a reproduction of connections existing between these node types.

7. Control program for a communication network planning system, which can be loaded into a main memory in a program control device and has at least one code section whose execution involves
- on a graphical user interface in the communication network planning system
- the graphical user interface being actuated on the basis of selection inputs received by an input unit for the purpose of representing a selected subnetwork and/or subnetwork gateway,
- an overview (100) of subnetworks (101-107) within a communication network being provided,
- a selector (111-117) for selecting a graphical representation of a subnetwork (101-107) being provided, said graphical representation comprising a hierarchically structured reproduction of node types (301-306) existing in the respective subnetwork and a reproduction of links existing between these node types, **characterized in that**
- a selector (121-125, 131-135) for selecting a combined graphical representation of a respective segment of interconnected subnetworks in the region of a subnetwork gateway is provided, said graphical representation comprising a hierarchically structured reproduction of node types (511, 512) existing in the respective subnetwork gateway region and a reproduction of connections existing between these node types,
when the control program is running in the program control device.

## Revendications

1. Système de planification de réseau de communication comportant
- une interface utilisateur graphique sur laquelle une unité de commande pour la commande de l'interface utilisateur graphique conformément à des entrées de sélection reçues par une unité d'entrée est mise à disposition,
- une vue d'ensemble (100) de sous-réseaux (101-107) à l'intérieur d'un réseau de communication est mise à disposition,
- un sélecteur (111-117) pour la sélection d'une représentation graphique d'un sous-réseau (101-107) est mis à disposition, qui comprend une reproduction structurée hiérarchiquement de types de noeuds (301-306) présents dans le sous-réseau correspondant et une reproduction de liaisons existant entre ces types de noeuds, **caractérisé en ce que**
- un sélecteur (121-125, 131-135) pour la sélection d'une représentation graphique combinée d'un secteur respectif de sous-réseaux interconnectés est mis à disposition dans la zone d'une passerelle de sous-réseaux, qui comprend une reproduction structurée hiérarchiquement de types de noeuds (511-512) présents dans la zone de la passerelle de sous-réseaux correspondante et une reproduction de liaisons existant entre ces types de noeuds.

2. Système selon la revendication 1, dans laquelle la reproduction structurée hiérarchiquement de types de noeuds présents dans le sous-réseau correspondant et/ou la zone de la passerelle de sous-réseaux s'effectue conformément à une possibilité d'affecter le type de noeud respectif à un niveau hiérarchique du réseau entre le réseau d'accès d'abonné et le réseau de transport.

3. Système selon l'une des revendications 1 ou 2, dans lequel la représentation graphique d'un sous-réseau comprend des données sur la fonctionnalité des types de noeuds respectifs.

4. Système selon l'une des revendications 1 à 3, dans lequel la représentation graphique d'un sous-réseau comporte des indications sur le nombre de noeuds par types de noeuds et/ou sur le nombre d'emplacements par types de noeuds.

5. Système selon l'une des revendications 1 à 4, dans lequel la représentation graphique d'un sous-réseau comporte des indications sur les produits d'équipement de réseau affectés aux types de noeuds correspondants et/ou à leurs fabricants.

6. Procédé pour la génération de plans de réseau de communication, dans lequel un dispositif d'impression affecté au système de planification de réseau de communication est commandé conformément à des entrées de sélection reçues par l'unité d'entrée pour l'impression de plans de réseaux de communication,
- sur une interface utilisateur graphique d'un système de planification de réseau de communication
- est mis à disposition un sélecteur (111-117) pour l'impression d'une représentation graphique d'un sous-réseau (101-107), qui comprend une reproduction structurée hiérarchiquement de types de noeuds (301-306) présents dans le sous-réseau correspondant et une reproduction de liaisons existant entre ces types de noeuds, **caractérisé en ce que**
- un sélecteur (121-125, 131-135) pour l'impression d'une représentation graphique combinée d'un secteur respectif de sous-réseaux interconnectés est mis à disposition dans la zone d'une passerelle de sous-réseaux, qui comprend une reproduction structurée hiérarchiquement de types de noeuds (511, 512) présents dans la zone de la passerelle de sous-réseaux correspondante et une reproduction de liaisons existant entre ces types de noeuds.

7. Programme de commande pour un système de planification de réseau de communication, qui peut être chargé dans une mémoire de travail d'un dispositif de commande de programme et qui comporte au moins un segment de code, lors de l'exécution duquel
- sur une interface utilisateur graphique du système de planification de réseau de communication
- l'interface utilisateur graphique est commandé conformément à des entrées de sélection reçues par une unité d'entrée pour la représentation d'un sous-réseau sélectionné et/ou d'une passerelle de sous-réseaux,
- une vue d'ensemble (100) de sous-réseaux (101-107) à l'intérieur d'un réseau de communication est mise à disposition,
- un sélecteur (111-117) pour la sélection d'une représentation graphique d'un sous-réseau (101-107) est mis à disposition, qui comprend une reproduction structurée hiérarchiquement de types de noeuds (301-306) présents dans le sous-réseau correspondant et une reproduction de liaisons existant entre ces types de noeuds, **caractérisé en ce que**
- un sélecteur (121-125, 131-135) pour la sélection d'une représentation graphique combinée d'un secteur respectif de sous-réseaux interconnectés est mis à disposition dans la zone d'une passerelle de sous-réseaux, qui comprend une reproduction structurée hiérarchiquement de types de noeuds (511, 512) présents dans la zone de la passerelle de sous-réseaux correspondante et une reproduction de liaisons existant entre ces types de noeuds,
lorsque le programme de commande est exécuté dans le dispositif de commande de programme.
